# FASCICULE DE BREVET EUROPEEN

(11) **EP 4 259 523 B1**
(45) Date de publication et mention de la délivrance du brevet: **14.05.2025**
(21) Numéro de dépôt: 21839013.6
(22) Date de dépôt: 08.12.2021
(51) Int. Cl.: B64D 11/06

(54) **UNITÉ DE SIEGE MUNIE D'UNE COQUE D'INTIMITE ESCAMOTABLE**
SITZEINHEIT MIT FALTBAREM SICHTSCHUTZSCHILD
SEAT UNIT WITH A FOLDING PRIVACY SHIELD

(30) Priorité: 10.12.2020 EP 20213063; 18.02.2021 FR 2101591
(43) Date de publication de la demande: 18.10.2023
(73) Titulaire: Safran Seats, 78370 Plaisir (FR)
(72) Inventeur: CAZALIS, Olivier, 77550 MOISSY-CRAMAYEL (FR); LIGONNIERE, Laurent, 77550 MOISSY-CRAMAYEL (FR); RAJHI, Mourad, 77550 MOISSY-CRAMAYEL (FR); BERNARDO DE MORAIS, José, 77550 MOISSY-CRAMAYEL (FR)
(74) Mandataire: Marconnet, Sébastien
(86) Numéro de dépôt international: PCT/EP2021/084743
(87) Numéro de publication internationale: WO 2022/122802

(56) Documents cités:
- EP-A1- 3 546 357
- WO-A1-2015/155687
- WO-A1-2018/093825

## Description

La présente invention porte sur une unité de siège munie d'une coque d'intimité escamotable. L'invention trouve une application particulièrement avantageuse avec les unités de sièges de type "classe affaires" et "première classe".

De façon connue en soi, de telles unités de sièges comportent chacune un siège associé à une console latérale munie de rangements et à une coque s'étendant au moins en partie autour du siège de manière à délimiter un espace semi-clos autour du passager. Une telle configuration permet de garantir l'intimité du passager assis sur le siège.

Le siège offre au passager différentes positions de confort, d'une position "assise" jusqu'à une position "allongée", dans laquelle le siège définit un plan de couchage sensiblement horizontal pour que le passager puisse s'allonger. Des positions intermédiaires de confort sont aussi proposées, telles que la position "relax" dans laquelle un dossier du siège est fortement incliné. Généralement, ces positions intermédiaires sont obtenues par l'inclinaison du dossier pivotant autour d'un axe horizontal et perpendiculaire à un axe d'extension du siège.

Classiquement, une cabine d'avion comporte des groupes de plusieurs colonnes d'unités de sièges situées les unes derrière les autres. A l'intérieur d'une colonne d'unités de sièges, la distance entre deux unités de sièges successives (dite "pitch" en anglais) est relativement faible, en particulier lorsque les sièges sont disposés en angle par rapport à un axe de la cabine d'avion pour en optimiser le remplissage. Une telle configuration rend donc difficile l'accès au siège pour les personnes à mobilité réduite qui nécessitent d'être transférées de leur fauteuil vers leur place assise par le personnel de bord.

Le document WO2018/093825 décrit des sièges passagers avec solutions d'évacuation d'urgence à confort amélioré pour mini-suites ou autres types de sièges passagers dotés d'une coque d'intimité ou d'une porte coulissante qui sépare le siège passager de l'allée ou d'une autre zone commune.

Le document EP3546357 décrit un agencement de siège passager destiné à être utilisé dans une cabine d'avion, l'agencement de siège passager comprenant une colonne d'unités de siège agencées dans un chevron tourné vers l'intérieur. Chaque unité de siège est configurable entre une configuration de siège et une configuration de lit. Au moins une unité de siège est configurable dans une configuration d'accès pour handicapés dans laquelle une ouverture d'accès est temporairement élargie par une partie mobile d'une structure de réception de pied pour permettre à un passager handicapé d'accéder à l'unité de siège.

Le document WO2015/155687 décrit des unités de siège comportant au moins un siège avec un coussin de dossier supérieur, un coussin de dossier inférieur et un coussin de siège. Le ou les sièges sont configurés pour effectuer une transition entre une position de siège et une position de lit. Le coussin de dossier de siège supérieur et le coussin de dossier de siège inférieur sont séparés par un espace situé entre une extrémité de chaque coussin lorsque le ou les sièges sont en position assise.

L'invention vise à remédier efficacement à cet inconvénient en proposant une unité de siège d'avion comportant:
- un siège mobile entre une position assise et une position allongée et
- une coque d'intimité s'étendant au moins en partie autour du siège,
- la coque d'intimité comportant une partie fixe et une partie mobile par rapport à la partie fixe,
- la partie mobile étant mobile entre:
   - une position rétractée dans laquelle la partie mobile délimite avec la partie fixe un espace semi-clos autour du siège pour conférer une intimité au passager et
   - une position déployée dans laquelle la partie mobile est éloignée par rapport au siège de façon à dégager un espace d'accès audit siège.

L'invention permet ainsi, grâce à la coque d'intimité escamotable via sa partie mobile, d'augmenter la dimension d'accès au siège pour des configurations à pitch court de façon à faciliter l'installation d'une personne à mobilité réduite. L'invention permet également de faciliter l'accès aux équipements du siège, notamment l'accès aux actionneurs ou aux boîtiers de puissance, en cas d'opérations de maintenance.

Selon l'invention, la partie mobile est éloignée par rapport au siège lorsqu'elle se trouve en position déployée, de telle façon que le siège en position allongée peut s'étendre au-delà d'une projection verticale au sol de l'espace semi-clos délimitée par la coque d'intimité lorsque ladite coque d'intimité se trouve en position rétractée.

Selon une réalisation de l'invention, la partie mobile de la coque d'intimité comporte:
- un ouvrant primaire,
- un ouvrant secondaire,
- une première liaison pivot étant disposée entre l'ouvrant primaire et l'ouvrant secondaire de façon à autoriser une rotation de l'ouvrant secondaire par rapport à l'ouvrant primaire autour d'un premier axe de rotation,
- une deuxième liaison pivot étant disposée entre l'ouvrant primaire et la partie fixe de la coque d'intimité de façon à autoriser une rotation de l'ouvrant primaire par rapport à la partie fixe autour d'un deuxième axe de rotation.

Selon une réalisation de l'invention, une liaison pivot est formée par au moins une charnière, notamment trois charnières.

Selon une réalisation de l'invention, la ou les charnières sont de type invisible.

Selon une réalisation de l'invention, ladite unité de siège comporte une bielle ayant une première extrémité montée rotative par rapport à l'ouvrant primaire et une deuxième extrémité montée rotative par rapport à un patin apte à coulisser le long d'une glissière disposée sur une portion inférieure de la partie fixe de la coque d'intimité.

Selon une réalisation de l'invention, ladite unité de siège comporte un dispositif de verrouillage et de déverrouillage en rotation de l'ouvrant secondaire par rapport à la partie fixe de la coque d'intimité.

Selon une réalisation de l'invention, le dispositif de verrouillage et de déverrouillage comporte un loquet apte à sélectivement coopérer avec une gâche dans un état verrouillé ou à être dégagé de la gâche dans un état déverrouillé.

Selon une réalisation de l'invention, ladite unité de siège comporte un dispositif de verrouillage et de déverrouillage en rotation de l'ouvrant primaire par rapport à la partie fixe de la coque d'intimité.

Selon une réalisation de l'invention, le dispositif de verrouillage et de déverrouillage comporte un doigt apte à sélectivement entourer en partie un plot dans un état verrouillé et à être dégagé par rapport au plot dans un état déverrouillé.

Selon une réalisation de l'invention, ladite unité de siège comporte un chariot portant la partie mobile de la coque d'intimité, et au moins une liaison glissière autorisant un déplacement en translation du chariot par rapport à la partie fixe pour passer de la position rétractée à la position déployée et inversement.

Selon une réalisation de l'invention, la ou les liaisons glissières présentent une direction longitudinale parallèle ou confondue avec un axe du siège de façon à autoriser un déplacement de la partie mobile suivant l'axe du siège.

Selon une réalisation de l'invention, la partie mobile comporte deux panneaux formant un angle non nul l'un par rapport à l'autre.

Selon une réalisation de l'invention, ladite unité de siège comporte un dispositif de verrouillage et de déverrouillage en translation de la partie mobile par rapport à la partie fixe de la coque d'intimité.

Selon une réalisation de l'invention, le dispositif de verrouillage et de déverrouillage comporte un verrou en forme de crochet mobile en rotation entre une position de verrouillage dans laquelle ledit verrou coopère avec un pion de verrouillage correspondant solidaire de la partie mobile et une position de déverrouillage dans laquelle ledit verrou est dégagé du pion de verrouillage.

Selon une réalisation de l'invention, le verrou est disposé sur un montant fixe.

Selon une réalisation de l'invention, le pion de verrouillage est disposé sur un montant mobile solidaire de la partie mobile.

Selon une réalisation de l'invention, le montant mobile comporte au moins un pion de centrage destiné à coopérer avec une forme correspondante ménagée dans le montant fixe.

Selon une réalisation de l'invention, ladite unité de siège comporte un volet d'accès au dispositif de verrouillage et de déverrouillage.

Selon une réalisation de l'invention, un moyen d'actionnement, tel qu'une manette ou un bouton, est apte à commander un déplacement du volet mobile d'une position fermée dans laquelle le volet ferme un espace d'accès au dispositif de verrouillage et de déverrouillage vers une position ouverte dans laquelle le volet ouvre l'espace d'accès au dispositif de verrouillage et de déverrouillage.

Selon une réalisation de l'invention, un dispositif à cames est relié mécaniquement d'une part au moyen d'actionnement par l'intermédiaire d'une tige de liaison et d'autre part au volet.

Selon une réalisation de l'invention, le dispositif de verrouillage et de déverrouillage comporte une sauterelle située sur une palette support du siège.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentées à titre d'exemples non limitatifs, qui pourront servir à compléter la compréhension de la présente invention et l'exposé de sa réalisation et, le cas échéant, contribuer à sa définition, sur lesquelles:
[Fig. 1a] La figure 1a est une vue en perspective d'un premier mode de réalisation d'une unité de siège selon l'invention munie d'une coque d'intimité ayant un ouvrant primaire et un ouvrant secondaire articulés l'un par rapport à l'autre;
[Fig. 1b] La figure 1b est une vue en perspective illustrant le déploiement de l'ouvrant secondaire de l'unité de siège de la figure 1a;
[Fig. 1c] La figure 1c est une vue en perspective illustrant le déploiement de l'ouvrant primaire de l'unité de siège de la figure 1a;
[Fig. 1d] La figure 1d est une vue en perspective de la coque d'intimité de l'unité de siège de la figure 1a en position déployée avec le siège en position allongée pour faciliter l'installation d'une personne à mobilité réduite;
[Fig. 2a] [Fig. 2b] [Fig. 2c] [Fig. 2d] Les figures 2a à 2d illustrent l'évolution des angles pris par l'ouvrant primaire et l'ouvrant secondaire lors d'un déploiement de la partie mobile de la coque d'intimité;
[Fig. 3] La figure 3 est une vue en perspective d'une structure formant la partie fixe et la partie mobile de la coque d'intimité;
[Fig. 4a] [Fig. 4b] Les figures 4a et 4b sont respectivement des vues en perspective et de dessus d'une charnière de type "invisible" utilisée pour former les liaisons pivots des ouvrants de la partie mobile;
[Fig. 5] La figure 5 est une vue en perspective d'un ensemble à bielle/liaison glissière destiné à supporter le porte-à-faux de la partie mobile de la coque d'intimité;
[Fig. 6] La figure 6 est une vue de dessous des ouvrants primaire et secondaire de la partie mobile de la coque d'intimité montrant des dispositifs de verrouillage et de déverrouillage en rotation des ouvrants;
[Fig. 7a] La figure 7a est une vue en perspective d'un deuxième mode de réalisation d'une unité de siège selon l'invention munie d'une coque d'intimité ayant une partie mobile montée sur un chariot mobile en translation;
[Fig. 7b] La figure 7b est une vue en perspective montrant la partie mobile de la coque d'intimité dans une position déployée;
[Fig. 8] La figure 8 est une vue de dos de l'unité de siège de la figure 7a montrant le détail d'un dispositif de verrouillage et de déverrouillage en translation de la partie mobile disposé verticalement le long de la partie fixe;
[Fig. 9a] [Fig. 9b] [Fig. 9c] Les figures 9a à 9c sont des vues en perspective illustrant les différentes étapes de déploiement d'un volet d'accès au dispositif de verrouillage et de déverrouillage en translation de la partie mobile de la coque d'intimité;
[Fig. 10] La figure 10 est une vue détaillée d'une sauterelle disposée sur une palette support de siège utilisée pour le verrouillage de la partie mobile de la coque d'intimité;
[Fig. 11] La figure 11 est une vue en perspective de l'unité de siège sans le siège de façon à rendre visible le charriot supportant la partie mobile de la coque d'intimité;
[Fig. 12] La figure 12 est une vue en perspective d'un montant fixe de l'unité de siège selon l'invention portant un crochet de verrouillage de la partie mobile de la coque d'intimité selon l'invention;
[Fig. 13] La figure 13 est une vue en perspective des éléments structurels liés mécaniquement à la partie mobile de la coque d'intimité selon l'invention;
[Fig. 14a] [Fig. 14b] Les figures 14a et 14b sont des vues en perspective respectivement d'une colonne d'unités de sièges conformes au premier mode de réalisation et d'une colonne d'unités de sièges conformes au deuxième mode de réalisation.

Il est à noter que les éléments structurels et/ou fonctionnels communs aux différents modes de réalisation présentent les mêmes références. Ainsi, sauf mention contraire, de tels éléments disposent de propriétés structurelles, dimensionnelles et matérielles identiques.

Par ailleurs, dans la suite de la description, les termes relatifs du type "avant", "arrière", "horizontal" ou "vertical" sont entendus par référence au sens commun que leur donnerait un passager assis sur un siège de l'unité de siège selon l'invention.

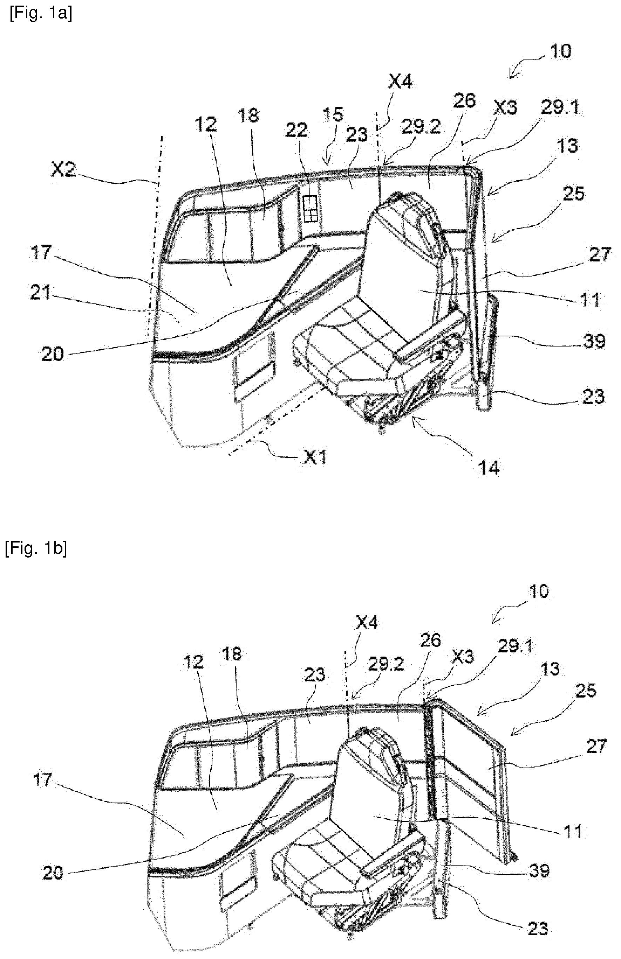

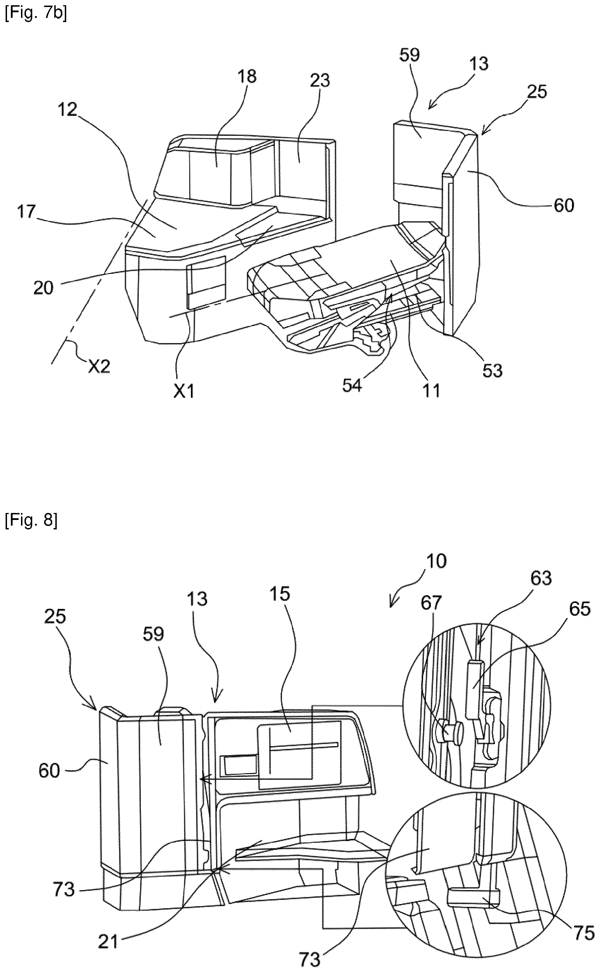

La figure 1a montre une unité de siège 10 comportant un siège 11 associé à une console latérale 12 s'étendant suivant un côté du siège 11. En outre, une coque dite coque d'intimité 13 s'étend au moins en partie autour du siège 11 de manière à délimiter un espace semi-clos 14 autour du passager. Une telle configuration permet de garantir l'intimité du passager assis sur le siège 11. Un écran vidéo 15 d'un système multimédia ou IFE (pour "Inflight Entertainment System" en anglais) pourra être implanté sur une partie arrière de la coque d'intimité 13 de façon à être utilisable par un passager arrière, tel que montré sur la figure 8.

Le siège 11 est avantageusement pourvu d'une cinématique lui permettant d'être mobile entre une position "assise", dans laquelle le siège 11 est configuré pour définir une position assise d'un passager, et une position "allongée", dans laquelle le siège 11 est configuré pour définir une surface de couchage du passager, avantageusement sensiblement horizontale. Des positions intermédiaires de confort sont aussi proposées, telles que la position "relax" dans laquelle un dossier du siège 11 est fortement incliné.

Le siège 11 comporte un axe d'extension X1 défini par l'intersection entre un plan horizontal et un plan médian vertical du siège 11 correspondant à un plan de symétrie du siège 11. L'axe d'extension X1 du siège 11 pourra former un angle non nul par rapport à un axe central X2 de la cabine d'avion, par exemple de l'ordre de 45 degrés. En l'occurrence, le siège 11 est tourné en direction de l'axe X2. En variante, le siège 11 pourra être tourné dans une direction opposée à l'axe X2.

Dans l'exemple représenté, la console 12 comporte une paroi supérieure horizontale 17 formant une surface de table sur laquelle un passager peut poser des objets. Du côté de son extrémité arrière, on pourra prévoir un espace de stockage vertical 18 comportant un ou plusieurs éléments parmi une pochette littérature, un porte-bouteille, ou un minibar. Le choix des rangements est configurable en fonction du souhait de la compagnie aérienne. En outre, une portion 20 de la console 12 pourra avoir une fonction d'accoudoir.

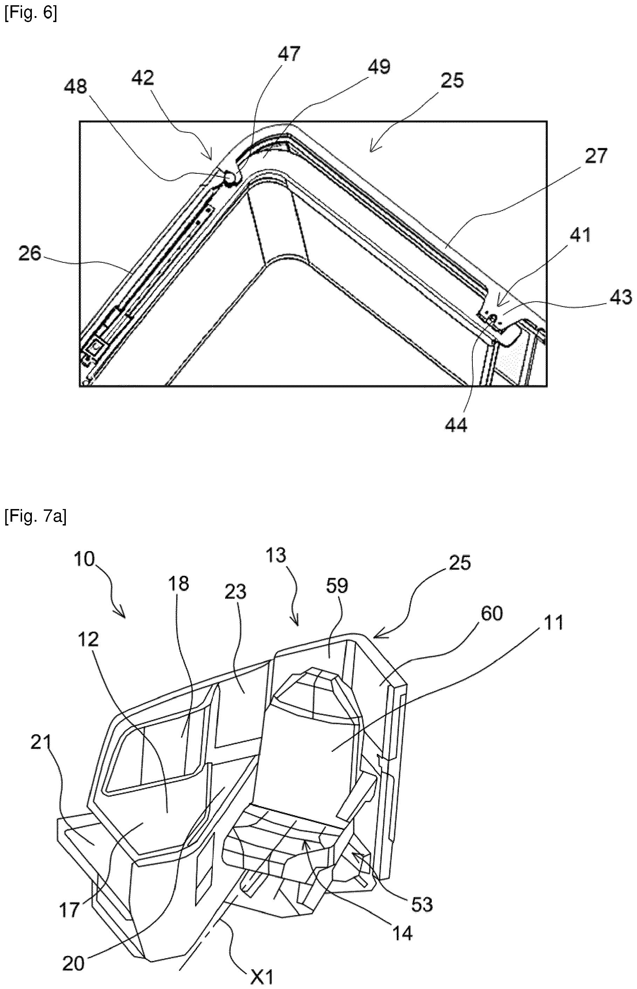

La console 12 pourra également comporter un logement 21, dit logement de pieds, comportant une face interne horizontale formant un repose-pieds (ou ottoman) pour un passager installé sur un siège 11 d'une unité de siège 10 arrière. Le logement de pieds est bien visible sur les figures 7a et 8.

Une unité de contrôle 22 (dite "PCU" pour "Passenger Control Unit" en anglais) est disposée à proximité du passager. L'unité de contrôle 22 permet de commander la sélection d'une position du siège 11 ainsi que l'environnement du siège 11 à savoir un système vidéo, un dispositif de chauffage, une ambiance lumineuse, ou tout autre paramètre de l'environnement du siège 11.

La coque d'intimité 13 comporte une partie fixe 23 et une partie mobile 25 par rapport à la partie fixe 23. La partie fixe 23 comporte un ou plusieurs panneaux solidaires de la console 12.

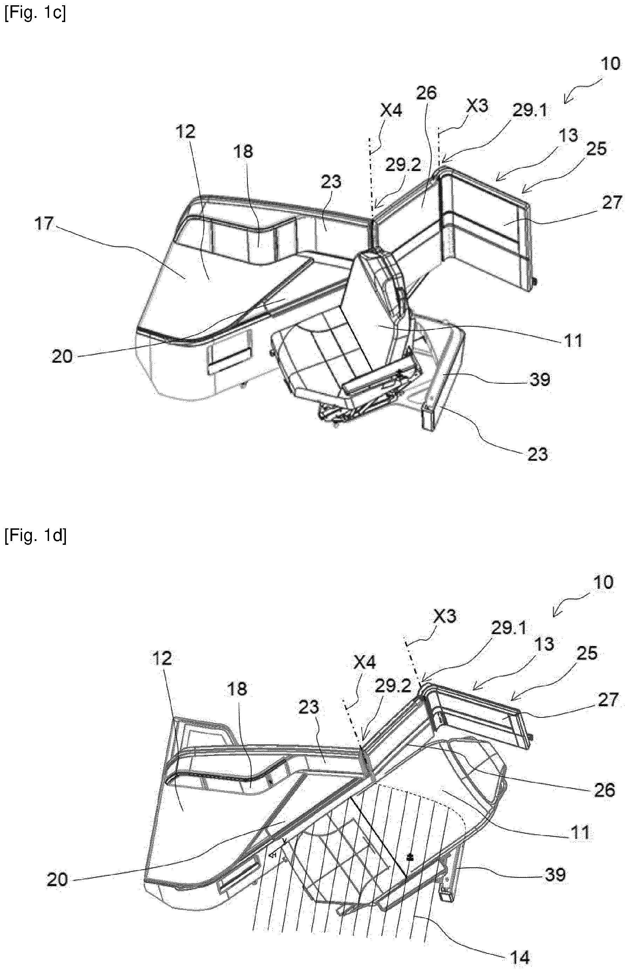

La partie mobile 25 est mobile entre une position rétractée montrée sur la figure 1a ou 7a dans laquelle la partie mobile 25 délimite avec la partie fixe 23 l'espace semi-clos 14 autour du siège 11 pour conférer une intimité au passager et une position déployée montrée sur la figure 1c ou 7b dans laquelle la coque d'intimité 13 est éloignée par rapport au siège 11 de façon à dégager un espace d'accès au siège 11. L'éloignement de la partie mobile 25 par rapport au siège 11 est appréciée relativement à la position occupée par la partie mobile 25 en position rétractée.

La partie mobile 25 est éloignée par rapport au siège 11 lorsqu'elle se trouve en position déployée, de telle façon que le siège 11 en position allongée peut s'étendre au-delà de l'espace semi-clos 14 délimité par la partie mobile 25 en position rétractée pour faciliter une installation d'une personne à mobilité réduite. En particulier, comme on peut le voir notamment sur la figure 1d, le siège 11 en position allongée s'étend au-delà d'une projection verticale au sol de l'espace semi-clos 14 représentée en traits hachurés et délimitée par la coque d'intimité 13 lorsque ladite coque d'intimité 13 se trouve en position rétractée.

Dans le mode de réalisation des figures 1a-1d, 2a-2d, et 3, la partie mobile 25 de la coque d'intimité 13 comporte un ouvrant primaire 26 et un ouvrant secondaire 27. Une première liaison pivot 29.1 est disposée entre l'ouvrant primaire 26 et l'ouvrant secondaire 27 de façon à autoriser une rotation de l'ouvrant secondaire 27 par rapport à l'ouvrant primaire 26 autour d'un premier axe de rotation X3. Une deuxième liaison pivot 29.2 est disposée entre l'ouvrant primaire 26 et la partie fixe 23 de la coque d'intimité 13 de façon à autoriser une rotation de l'ouvrant primaire 26 par rapport à la partie fixe 23 autour d'un deuxième axe de rotation X4.

En position rétractée, l'ouvrant primaire 26 forme un angle non nul par rapport à l'ouvrant secondaire 27, notamment un angle de l'ordre de 90 degrés. Les ouvrants 26, 27 présentent ainsi une configuration permettant d'entourer au moins en partie le siège 11 de façon à conférer de l'intimité au passager.

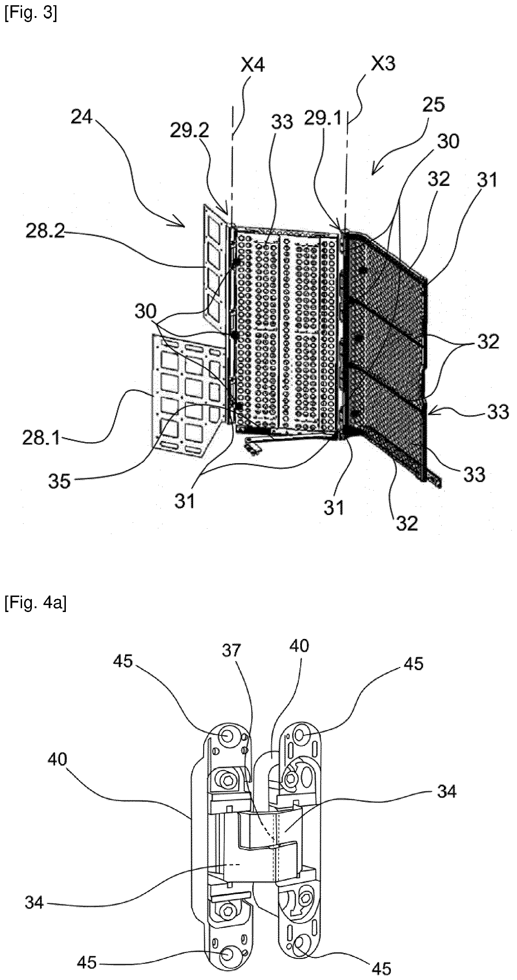

Comme on peut le voir sur la figure 3, un ouvrant 26, 27 pourra être constitué par des montants verticaux 31 (au moins deux à chacune de ses extrémités), des traverses horizontales 32, et deux tôles 33 disposées de part et d'autre de cet ensemble structurel formé par les montants 31 et les traverses 32. Les tôles 33 pourront être recouvertes de panneaux d'habillage interne et externe dont la finition est assurée notamment au moyen d'un film ou d'un matériau peint. En variante, un ouvrant 26, 27 pourra prendre la forme d'un panneau réalisé dans un matériau composite.

Une structure porteuse 24 de l'ouvrant primaire 26 est formée ici par deux panneaux 28.1, 28.2. Le panneau 28.1 est destiné à être lié mécaniquement à une paroi de la console 12 située au niveau du logement de pieds 21. Le panneau 28.2 est fixé à un élément structurel de la console 12 de façon à former au moins une portion de la partie fixe 23 de la coque d'intimité 13.

Avantageusement, une liaison pivot 29.1, 29.2 est formée par au moins une charnière 30, notamment trois charnières 30, tel que cela est montré sur la figure 3. Ainsi, on prévoit trois charnières 30 entre l'ouvrant primaire 26 et l'ouvrant secondaire 27 et trois charnières 30 entre l'ouvrant primaire 26 et la partie fixe 23 de la coque d'intimité 13.

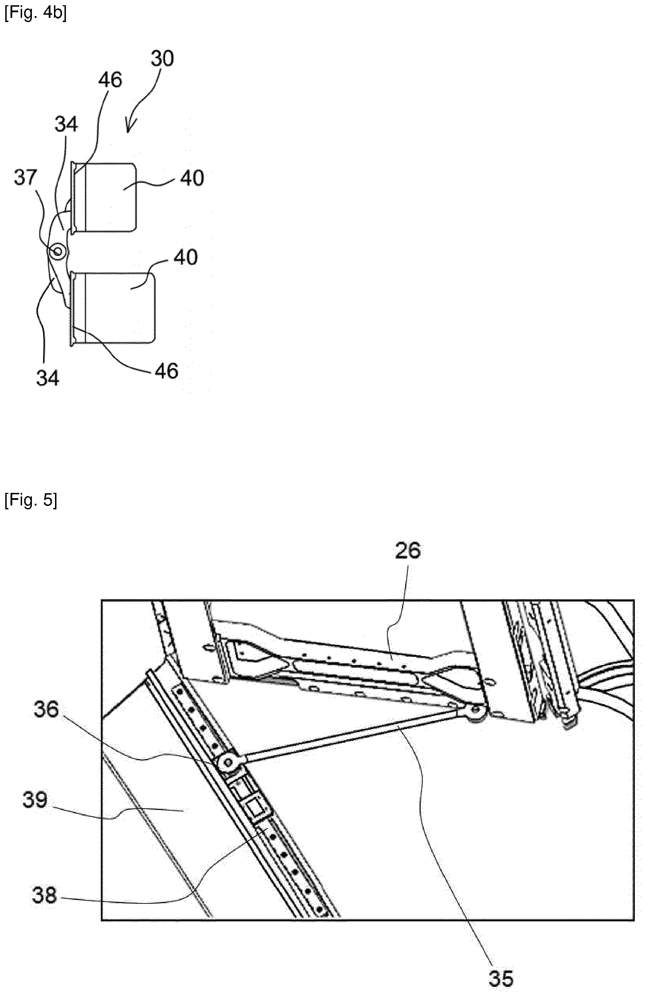

Comme cela est illustré par les figures 4a et 4b, une charnière 30 dite de type "invisible" comporte deux portions 34 articulées l'une par rapport à l'autre autour d'un axe 37. Chaque portion 34 comporte un élément en saillie 40, dit charnon, destiné à venir s'insérer à l'intérieur d'un logement de forme correspondante ménagé dans une épaisseur d'un ouvrant 26, 27. Chaque portion 34 comporte également une interface de fixation 45 comportant des trous de passage d'organes de fixation, tels que des vis. L'interface de fixation 45 pourra être recouverte par un cache 46 de façon à cacher les têtes de vis.

Une telle configuration permet d'améliorer la qualité perçue de l'ensemble en limitant au maximum le jeu entre les éléments articulés au droit des lignes de découpes.

Avantageusement, comme on peut le voir sur la figure 5, l'unité de siège 10 comporte une bielle 35 ayant une première extrémité montée rotative par rapport à l'ouvrant primaire 26 et une deuxième extrémité montée rotative par rapport à un patin 36 apte à coulisser le long d'une glissière 38 disposée sur une portion de la partie fixe 23. Une telle configuration permet d'assurer le support de la masse et du porte-à-faux de l'ouvrant secondaire 27 en position déployée.

En l'occurrence, la glissière 38 est disposée sur une portion inférieure 39 de la partie fixe 23 de la coque d'intimité 13. La portion inférieure 39 est destinée à être fixée au plancher de la cabine d'avion. La portion inférieure 39 comporte deux parois formant un angle non nul entre elles correspondant à l'angle que forment entre eux les ouvrants 26, 27 lorsque la partie mobile 25 se trouve en position rétractée.

Comme cela est visible sur la figure 6, l'unité de siège 10 comporte un dispositif 41 de verrouillage et de déverrouillage en rotation de l'ouvrant secondaire 27 par rapport à la partie fixe 23 de la coque d'intimité 13, notamment par rapport à la portion inférieure 39.

Le dispositif 41 de verrouillage et de déverrouillage comporte un loquet 43 apte à sélectivement coopérer avec une gâche 44 dans un état verrouillé ou à être dégagé de la gâche 44 dans un état déverrouillé. Le loquet 43 pourra être manipulé par un membre de l'équipage ou d'une équipe de maintenance. Le loquet 43 est par exemple disposé sur la partie mobile 25, plus précisément l'ouvrant secondaire 27, tandis que la gâche 44 est disposée sur un élément de protection 49 vis-à-vis des chocs externes, appelé "bumper" en anglais fixé sur la portion inférieure 39. En variante, la structure pourrait être inversée, c'est-à-dire que le loquet 43 est disposé sur l'élément de protection 49 tandis que la gâche 44 est disposée sur la partie mobile 25.

De façon optionnelle, l'unité de siège 10 comporte également un dispositif 42 de verrouillage et de déverrouillage en rotation de l'ouvrant primaire 26 par rapport à la partie fixe 23 de la coque d'intimité 13. Le dispositif 42 de verrouillage et de déverrouillage comporte un doigt 47 apte à sélectivement entourer en partie un plot 48 dans un état verrouillé et à être dégagé par rapport au plot 48 dans un état déverrouillé. Le passage d'un état à l'autre s'effectue naturellement par un phénomène d'encliquetage sans action de la part d'un opérateur autre que celle de la rotation de l'ouvrant primaire 26. Le doigt 47 est par exemple disposé sur la partie mobile 25 tandis que le plot 48 est disposé sur l'élément de protection 49. En variante, la structure pourrait être inversée, c'est-à-dire que le doigt 47 est disposé sur l'élément de protection 49, tandis que le plot 48 est disposé sur la partie mobile 25. Cet ensemble "doigt 47 - plot 48" assure également une fonction de reprise d'effort mécanique.

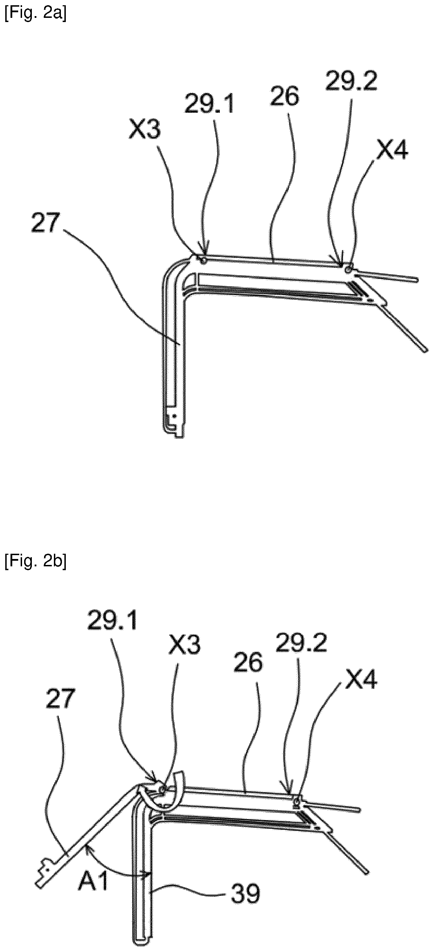

On décrit ci-après, en référence avec les figures 1a-1d et 2a-2d, le fonctionnement de la coque d'intimité 13 de l'unité de siège 10 selon l'invention apte à se déployer par rotation suivant deux phases successives.

Au départ, comme cela est représenté sur les figures 1a et 2a, la partie mobile 25 de la coque d'intimité 13 est en position rétractée.

Un membre d'équipage peut alors actionner le dispositif 41 de verrouillage et de déverrouillage de façon à autoriser une rotation de l'ouvrant secondaire 27 par rapport à l'ouvrant primaire 26 autour de l'axe X3.

Comme on peut le voir sur les figures 1b et 2b, la rotation de l'ouvrant secondaire 27 est autorisée jusqu'à ce que l'angle A1 que forme l'ouvrant secondaire 27 par rapport à sa position rétractée atteigne un angle limite par exemple de l'ordre de 45 degrés. Par "de l'ordre de", on entend une variation de plus ou moins 10 pourcents par rapport à la valeur indiquée.

Une fois l'angle limite atteint, le doigt 47 du dispositif 41 se dégage du plot 48 de façon à autoriser une rotation de l'ouvrant primaire 26.

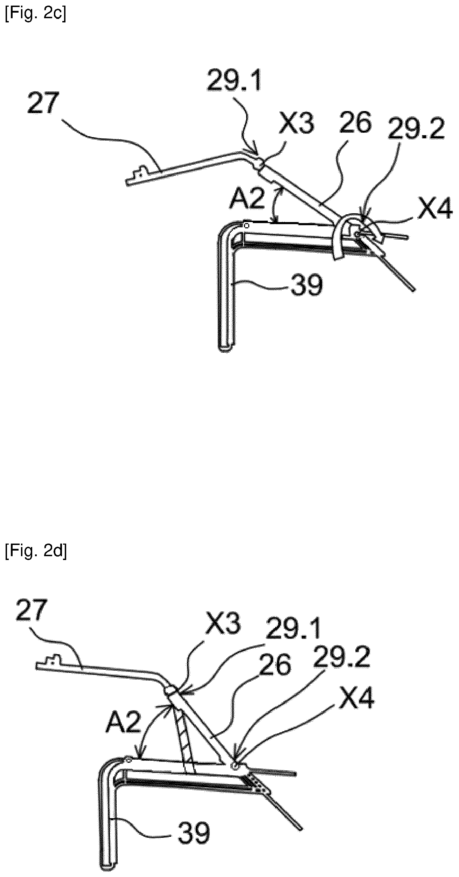

Comme on peut le voir sur la figure 2c, la rotation de l'ouvrant primaire 26 est autorisée jusqu'à ce que l'angle A2 que forme l'ouvrant primaire 26 par rapport à sa position rétractée atteigne un angle seuil, par exemple de l'ordre de 30 degrés, à partir duquel le système bielle 35-liaison glissière 38 commence à se déployer lorsque l'angle A2 augmente.

Comme cela est illustré par la figure 2d, le patin 36 est alors apte à coulisser en translation le long de la glissière 38, de sorte que l'angle A2 de l'ouvrant primaire 26 peut augmenter jusqu'à atteindre un angle limite de l'ordre de 55 degrés. En position déployée, la bielle 35 peut alors supporter la masse importante générée par le porte-à-faux de la partie mobile 25 ainsi écartée du siège 11.

Lorsque la partie mobile 25 se trouve en position déployée, le membre d'équipage peut commander un déplacement du siège 11 via l'unité de contrôle du siège 22, de façon à abaisser le dossier à 180 degrés pour faire passer le siège 11 de la position assise à la position allongée et faciliter l'installation du passager sur le siège 11.

Une fois que le passager a été transféré sur le siège 11, le membre d'équipage pourra effectuer les opérations inverses de façon à remonter le dossier pour remettre le siège 11 en position assise puis à faire repasser la partie mobile 25 de la coque 13 en position rétractée pour conférer une intimité au passager.

Dans le mode de réalisation des figures 7a, 7b, 8, et 10, la partie mobile 25 est mobile en translation par rapport à la partie fixe 23. A cet effet, l'unité de siège 10 comporte un chariot 53 portant la partie mobile 25 de la coque d'intimité 13 et au moins une liaison glissière 54, en l'occurrence deux liaisons glissières 54, autorisant un déplacement en translation du chariot 53 par rapport à la partie fixe 23 pour passer de la position rétractée à la position déployée et inversement.

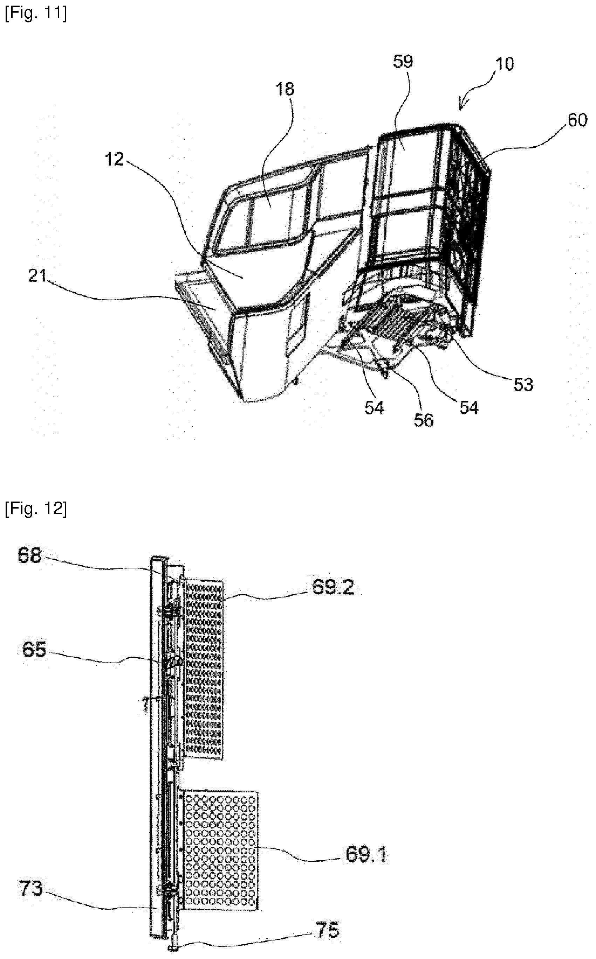

Une liaison glissière 54 est avantageusement installée entre le chariot 53 et une palette support 56 de siège visible en figure 11. La palette support 56 assure notamment une interface de fixation entre le siège 11 et le plancher de la cabine d'avion.

Une liaison glissière 54 présente une direction longitudinale parallèle ou confondue avec l'axe X1 du siège de façon à autoriser un déplacement de la partie mobile 25 suivant l'axe X1 du siège 10, tel que cela est illustré par la figure 7b. Cet axe X1 forme ici un angle non nul par rapport à l'axe X2 de la cabine d'avion valant par exemple de l'ordre de 45 degrés.

Une liaison glissière 54 pourra être formée par des guides longitudinaux aptes à coulisser les uns par rapport à l'autre, des rails, ou tout autre moyen adapté à la réalisation d'une liaison glissière 54.

Par ailleurs, la partie mobile 25 comporte deux panneaux 59, 60 formant un angle non nul l'un par rapport à l'autre, notamment un angle de l'ordre de 90 degrés. Un panneau 59, 60 est de préférence monobloc avec l'autre panneau 59, 60, de sorte que l'ensemble de deux panneaux 59, 60 forme une seule et même pièce constituant la partie mobile 25 de la coque d'intimité 13. La structure d'un panneau 59, 60 est analogue à celle d'un ouvrant 26, 27 décrit précédemment.

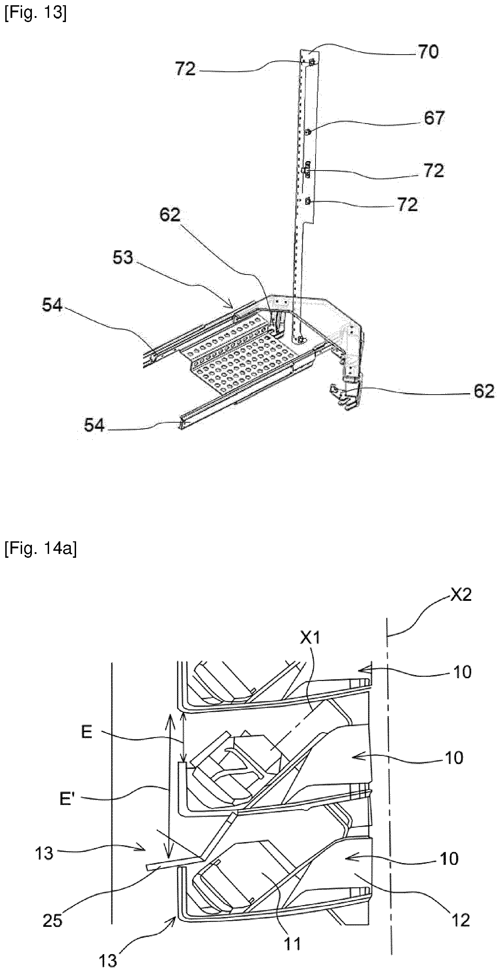

Afin de lier mécaniquement la partie mobile 25 au chariot 53, ledit chariot 53 comporte des interfaces de fixation 62 visibles sur la figure 13 munies de trous de passage d'organes de fixation, tels que des vis, des goujons, ou des rivets ou tout autre organe de fixation adapté à l'application.

Comme on peut le voir sur la figure 8, l'unité de siège 10 comporte un dispositif 63 de verrouillage et de déverrouillage en translation de la partie mobile 25 par rapport à la partie fixe 23 de la coque d'intimité 13.

Le dispositif 63 de verrouillage et de déverrouillage comporte un verrou 65 en forme de crochet mobile en rotation entre une position de verrouillage dans laquelle ledit verrou 65 coopère avec un pion de verrouillage 67 correspondant solidaire de la partie mobile 25 et une position de déverrouillage dans laquelle ledit verrou 65 est dégagé du pion de verrouillage 67.

Comme on peut le voir sur la figure 12, le verrou 65 pourra être disposé sur un montant fixe 68 lié mécaniquement à la console 13. Le montant fixe 68 porte deux panneaux 69.1, 69.2 analogues aux panneaux 28.1 et 28.2 de la figure 3. Le panneau 69.1 est destiné à être lié mécaniquement à une paroi de la console 12 située au niveau du logement de pieds 21. Le panneau 69.2 est fixé sur un élément structurel de la console 12 de façon à former une portion de la partie fixe 23 de la coque d'intimité 13.

Le pion de verrouillage 67 est disposé sur un montant mobile 70 solidaire de la partie mobile 25, tel que montré sur la figure 13. Ce montant mobile 70 comporte avantageusement également des pions de centrage 72, en l'occurrence trois pions de centrage 72, destinés à coopérer avec des formes correspondantes ménagées dans le montant fixe 68.

Avantageusement, comme on peut le voir sur les figures 8 et 12, on prévoit un volet d'accès 73 au dispositif 63 de verrouillage et de déverrouillage.

Un moyen d'actionnement 75, tel qu'une manette ou un bouton, manipulable par un membre d'équipage est apte à commander un déplacement du volet 73 mobile d'une position fermée dans laquelle le volet 73 ferme un espace d'accès au dispositif 63 vers une position ouverte dans laquelle le volet 73 ouvre l'espace d'accès au dispositif 63.

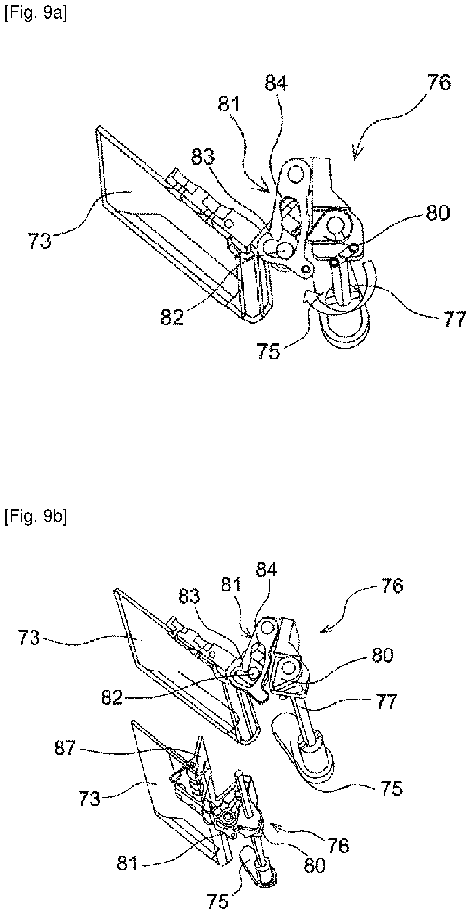

A cet effet, un dispositif à cames 76 montré sur les figures 9a à 9c, est relié mécaniquement d'une part au moyen d'actionnement 75 par l'intermédiaire d'une tige de liaison 77 et d'autre part au volet 73 dont la rotation est commandée.

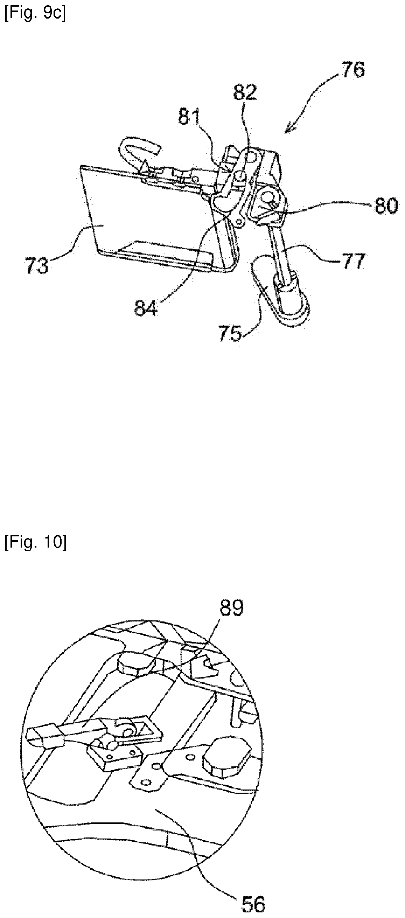

Comme cela est illustré sur la figure 9a, la manipulation du moyen d'actionnement 75 par un membre d'équipage engendre une rotation d'une came 80, laquelle déplace une came à rainure 81 de façon qu'un ergot 82 puisse passer un point de blocage 83 de la rainure 84. Comme cela est illustré par la figure 9b, une charnière à ressort 87 agit alors sur le volet 73 et engendre un déplacement de l'ergot 82. Comme cela est illustré par la figure 9c, le volet 73 passe en position ouverte et l'ergot 82 vient en butée contre une extrémité de la rainure 84. Le membre d'équipage peut alors avoir accès au verrou 65.

Il est également possible de prévoir une sauterelle 89 située sur une palette support 56 du siège 11, tel que cela est montré sur la figure 10. La sauterelle 89 est destinée à coopérer avec une accroche de forme correspondante située sur la partie mobile 25 dans un état verrouillé et à être dégagée de l'accroche située sur la partie mobile 25 dans un état déverrouillé.

On décrit ci-après le fonctionnement de la coque d'intimité 13 du mode de réalisation des figures 7a à 13 comportant une partie mobile 25 montée sur le chariot 53 apte à se déployer suivant un mouvement de translation.

Au départ, comme cela est représenté sur la figure 7a, la partie mobile 25 de la coque d'intimité 13 est en position rétractée. En position rétractée, la partie mobile 25 se situe dans un prolongement de la partie fixe 23.

Un membre d'équipage peut alors manipuler le moyen d'actionnement 75 de façon à ouvrir le volet 73 pour accéder au dispositif 63 de verrouillage et de déverrouillage. Le membre d'équipage peut alors dégager le verrou 65 par rapport au pion de verrouillage 67.

Le membre d'équipage ouvre également la sauterelle 89 de façon à autoriser une translation de la partie mobile 25 par rapport à la partie fixe 23.

La partie mobile 25 peut alors se déplacer dans sa position déployée via le coulissement du chariot 53 suivant la liaison glissière 54, tel que cela est montré sur la figure 7b. Le déplacement de la partie mobile 25 pourra être effectué manuellement ou automatiquement si le chariot 53 est équipé d'un moteur électrique. En position déployée, la partie mobile 25 se situe à distance de la partie fixe 23.

Lorsque la partie mobile 25 se trouve en position déployée, le membre d'équipage peut commander un déplacement du siège 11 via le module de commande PCU de façon à abaisser le dossier à 180 degrés pour faire passer le siège 11 de la position assise à la position allongée et faciliter l'installation du passager sur le siège 11.

Une fois que le passager a été transféré sur le siège 11, le membre d'équipage pourra effectuer les opérations inverses de façon à remonter le dossier pour remettre le siège 11 en position assise puis à faire repasser la partie mobile 25 de la coque en position rétractée pour conférer une intimité au passager.

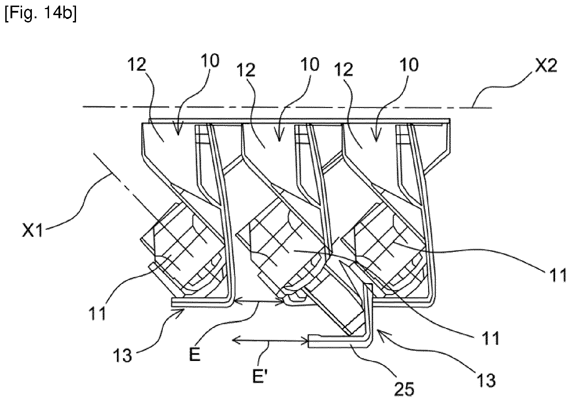

Les figures 14a et 14b illustrent une colonne de trois unités de sièges 10 disposées les unes derrière les autres. Ces figures mettent en évidence que les deux modes de réalisation de la partie mobile 25 de la coque d'intimité 13 permettent d'augmenter l'espace d'accès au siège 11 par rapport à une configuration d'unités de sièges 10 classique à coque d'intimité fixe (cf. espace d'accès E avec une coque d'intimité fixe et espace d'accès E' obtenu grâce à la partie mobile 25 de la coque d'intimité 13 en position déployée.)

La coque d'intimité 13 pourra le cas échéant intégrer un airbag rideau sur la façade arrière.

La partie fixe 23 de la coque d'intimité 13 pourra également comporter une porte amovible disposée du côté d'un couloir de circulation de la cabine d'avion.

Bien entendu, les différentes caractéristiques, variantes et/ou formes de réalisation de la présente invention peuvent être associées les unes avec les autres selon diverses combinaisons dans la mesure où elles ne sont pas incompatibles ou exclusives les unes des autres et qu'elles sont dans la portée des revendications annexées.

En outre, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention et notamment toutes combinaisons des différents modes de fonctionnement décrits précédemment, pouvant être pris séparément ou en association, dans le cadre de la présente invention définie par la portée des revendications annexées.

## Revendications

1. Unité de siège (10) d'avion comportant:
- un siège (11) mobile entre une position assise et une position allongée, et
- une coque d'intimité (13) s'étendant au moins en partie autour du siège (11),
- la coque d'intimité (13) comportant une partie fixe (23) et une partie mobile (25) par rapport à la partie fixe (23),
- la partie mobile (25) étant mobile entre:
- une position rétractée dans laquelle la partie mobile (25) délimite avec la partie fixe (23) un espace semi-clos (14) autour du siège (11) pour conférer une intimité au passager, et
- une position déployée dans laquelle la partie mobile (25) est éloignée par rapport au siège (11) de façon à dégager un espace d'accès audit siège (11),
**caractérisée en ce que**:
- la partie mobile (25) est éloignée par rapport au siège (11) lorsqu'elle se trouve en position déployée, de telle façon que le siège (11) en position allongée peut s'étendre au-delà d'une projection verticale au sol de l'espace semi-clos (14) délimitée par la coque d'intimité (13) lorsque ladite coque d'intimité (13) se trouve en position rétractée.

2. Unité de siège selon la revendication 1, **caractérisée en ce que** la partie mobile (25) de la coque d'intimité (13) comporte:
- un ouvrant primaire (26),
- un ouvrant secondaire (27),
- une première liaison pivot (29.1) étant disposée entre l'ouvrant primaire (26) et l'ouvrant secondaire (27) de façon à autoriser une rotation de l'ouvrant secondaire (27) par rapport à l'ouvrant primaire (26) autour d'un premier axe de rotation (X3),
- une deuxième liaison pivot (29.2) étant disposée entre l'ouvrant primaire (26) et la partie fixe (23) de la coque d'intimité (13) de façon à autoriser une rotation de l'ouvrant primaire (26) par rapport à la partie fixe (23) autour d'un deuxième axe de rotation (X4).

3. Unité de siège selon la revendication 2, **caractérisée en ce qu'**une liaison pivot (29.1, 29.2) est formée par au moins une charnière (30), notamment trois charnières (30).

4. Unité de siège selon la revendication 3, **caractérisée en ce que** la ou les charnières (30) sont de type invisible.

5. Unité de siège selon l'une quelconque des revendications 2 à 4, **caractérisée en ce qu'**elle comporte une bielle (35) ayant une première extrémité montée rotative par rapport à l'ouvrant primaire (26) et une deuxième extrémité montée rotative par rapport à un patin (36) apte à coulisser le long d'une glissière (38) disposée sur une portion inférieure (39) de la partie fixe (23) de la coque d'intimité (13).

6. Unité de siège selon l'une quelconque des revendications 2 à 5, **caractérisée en ce qu'**elle comporte un dispositif (41) de verrouillage et de déverrouillage en rotation de l'ouvrant secondaire (27) par rapport à la partie fixe (23) de la coque d'intimité (13).

7. Unité de siège selon la revendication 6, **caractérisée en ce que** le dispositif (41) de verrouillage et de déverrouillage comporte un loquet (43) apte à sélectivement coopérer avec une gâche (44) dans un état verrouillé ou à être dégagé de la gâche (44) dans un état déverrouillé.

8. Unité de siège selon l'une quelconque des revendications 2 à 7, **caractérisée en ce qu'**elle comporte un dispositif (42) de verrouillage et de déverrouillage en rotation de l'ouvrant primaire (26) par rapport à la partie fixe (23) de la coque d'intimité (13).

9. Unité de siège selon la revendication 8, **caractérisée en ce que** le dispositif (42) de verrouillage et de déverrouillage comporte un doigt (47) apte à sélectivement entourer en partie un plot (48) dans un état verrouillé et à être dégagé par rapport au plot (48) dans un état déverrouillé.

10. Unité de siège selon la revendication 1, **caractérisée en ce qu'**elle comporte un chariot (53) portant la partie mobile (25) de la coque d'intimité (13), et au moins une liaison glissière (54) autorisant un déplacement en translation du chariot (53) par rapport à la partie fixe (23) pour passer de la position rétractée à la position déployée et inversement.

11. Unité de siège selon la revendication 10, **caractérisée en ce que** la ou les liaisons glissières (54) présentent une direction longitudinale parallèle ou confondue avec un axe (X1) du siège (11) de façon à autoriser un déplacement de la partie mobile (25) suivant l'axe (X1) du siège (11).

12. Unité de siège selon la revendication 10 ou 11, **caractérisée en ce que** la partie mobile (25) comporte deux panneaux (59, 60) formant un angle non nul l'un par rapport à l'autre.

13. Unité de siège selon l'une quelconque des revendications 10 à 12, **caractérisée en ce qu'**elle comporte un dispositif (63) de verrouillage et de déverrouillage en translation de la partie mobile (25) par rapport à la partie fixe (23) de la coque d'intimité (13).

14. Unité de siège selon la revendication 13, **caractérisée en ce que** le dispositif (63) de verrouillage et de déverrouillage comporte un verrou (65) en forme de crochet mobile en rotation entre une position de verrouillage dans laquelle ledit verrou (65) coopère avec un pion de verrouillage (67) correspondant solidaire de la partie mobile (25) et une position de déverrouillage dans laquelle ledit verrou (65) est dégagé du pion de verrouillage (67).

15. Unité de siège selon la revendication 14, **caractérisée en ce que** le verrou (65) est disposé sur un montant fixe (68).

16. Unité de siège selon la revendication 14 ou 15, **caractérisée en ce que** le pion de verrouillage (67) est disposé sur un montant mobile (70) solidaire de la partie mobile (25).

17. Unité de siège selon les revendications 15 et 16, **caractérisée en ce que** le montant mobile (70) comporte au moins un pion de centrage (72) destiné à coopérer avec une forme correspondante ménagée dans le montant fixe (68).

18. Unité de siège selon l'une quelconque des revendications 13 à 17, **caractérisée en ce qu'**elle comporte un volet d'accès (73) au dispositif (63) de verrouillage et de déverrouillage.

19. Unité de siège selon la revendication 18, **caractérisée en ce qu'**un moyen d'actionnement (75), tel qu'une manette ou un bouton, est apte à commander un déplacement du volet (73) mobile d'une position fermée dans laquelle le volet (73) ferme un espace d'accès au dispositif (63) de verrouillage et de déverrouillage vers une position ouverte dans laquelle le volet (73) ouvre l'espace d'accès au dispositif (63) de verrouillage et de déverrouillage.

20. Unité de siège selon la revendication 19, **caractérisée en ce qu'**un dispositif à cames (76) est relié mécaniquement d'une part au moyen d'actionnement (75) par l'intermédiaire d'une tige de liaison (77) et d'autre part au volet (73).

21. Unité de siège selon la revendication 13, **caractérisée en ce que** le dispositif (63) de verrouillage et de déverrouillage comporte une sauterelle (89) située sur une palette support (56) du siège (11).

## Patentansprüche

1. Flugzeugsitzeinheit (10) mit :
- einem zwischen einer Sitzposition und einer Liegeposition beweglichen Sitz (11) und
- einer sich zumindest teilweise um den Sitz (11) erstreckenden Sichtschutzschale (13),
- wobei die Sichtschutzschale (13) aus einem feststehenden Teil (23) und einem relativ zum feststehenden Teil (23) beweglichen Teil (25) besteht,
- wobei das bewegliche Teil (25) zwischen:
- einer eingefahrenen Position, in der der bewegliche Teil (25) mit dem feststehenden Teil (23) einen halbgeschlossenen Raum (14) um den Sitz (11) herum abgrenzt, um den Passagier mit einer Privatsphäre zu versehen, und
- einer ausgefahrene Position, in der der bewegliche Teil (25) vom Sitz (11) wegbewegt ist, um einen Raum für den Zugang zum Sitz (11) freizugeben,
beweglich ist,
**dadurch gekennzeichnet, dass**:
- der bewegliche Teil (25) vom Sitz (11) beabstandet ist, wenn er sich in der ausgefahrenen Position befindet, so dass der Sitz (11) in der Liegeposition über eine vertikale Bodenprojektion des halbgeschlossenen Raums (14) hinaus, der durch die Sichtschutzschale (13) begrenzt wird, wenn sich die Sichtschutzhülle (13) in der eingefahrenen Position befindet, erstrecken kann.

2. Sitzeinheit nach Anspruch 1, **dadurch gekennzeichnet, dass** der bewegliche Teil (25) der Sichtschutzschale (13):
- einen Primärflügel (26),
- einen Sekundärflügel (27),
umfasst
- wobei eine erste Schwenkverbindung (29.1) zwischen dem Primärflügel (26) und dem Sekundärflügel (27) angeordnet ist, um eine Drehung des Sekundärflügels (27) relativ zum Primärflügel (26) um eine erste Drehachse (X3) zu ermöglichen,
- wobei eine zweite Schwenkverbindung (29.2) zwischen dem Primärflügel (26) und dem feststehenden Teil (23) der Sichtschutzschale (13) angeordnet ist, um eine Drehung des Primärflügels (26) relativ zum feststehenden Teil (23) um eine zweite Drehachse (X4) zu ermöglichen.

3. Sitzeinheit nach Anspruch 2, **dadurch gekennzeichnet, dass** eine Schwenkverbindung (29.1, 29.2) durch mindestens ein Scharnier (30), insbesondere drei Scharniere (30), gebildet ist.

4. Sitzeinheit nach Anspruch 3, **dadurch gekennzeichnet, dass** das/die Scharnier(e) (30) unsichtbar sind.

5. Sitzeinheit nach einem der Ansprüche 2 bis 4, **dadurch gekennzeichnet, dass** sie eine Verbindungsstange (35) umfasst, deren erstes Ende relativ zum Primärflügel (26) drehbar montiert ist und deren zweites Ende relativ zu einem Schuh (36), der entlang einer an einem unteren Abschnitt (39) des festen Teils (23) der Sichtschutzschale (13) angeordneten Führung (38) gleiten kann, drehbar montiert ist.

6. Sitzeinheit nach einem der Ansprüche 2 bis 5, **dadurch gekennzeichnet, dass** sie eine Vorrichtung (41) zum Verriegeln und Entriegeln der Drehung des Sekundärflügels (27) relativ zum feststehen Teil (23) der Sichtschutzschale (13) umfasst.

7. Sitzeinheit nach Anspruch 6, **dadurch gekennzeichnet, dass** die Verriegelungs- und Entriegelungsvorrichtung (41) einen Riegel (43) umfasst, der wahlweise in einem verriegelten Zustand mit einer Schließkappe (44) zusammenwirken oder in einem entriegelten Zustand von der Schließkappe (44) gelöst werden kann.

8. Sitzeinheit nach einem der Ansprüche 2 bis 7, **dadurch gekennzeichnet, dass** sie eine Vorrichtung (42) zum Verriegeln und Entriegeln der Drehung des Primärflügels (26) relativ zum feststehenden Teil (23) der Sichtschutzschale (13) umfasst.

9. Sitzeinheit nach Anspruch 8, **dadurch gekennzeichnet, dass** die Verriegelungs- und Entriegelungsvorrichtung (42) einen Finger (47) umfasst, der wahlweise in einem verriegelten Zustand einen Bolzen (48) teilweise umschließen und in einem entriegelten Zustand vom Bolzen (48) gelöst werden kann.

10. Sitzeinheit nach Anspruch 1, **dadurch gekennzeichnet, dass** sie einen Schlitten (53), der den beweglichen Teil (25) der Sichtschutzschale (13) trägt, und mindestens eine Gleitverbindung (54), die eine Translationsbewegung des Schlittens (53) relativ zum feststehenden Teil (23) ermöglicht, um ihn von der eingefahrenen Position in die ausgefahrene Position und umgekehrt zu bewegen, umfasst.

11. Sitzeinheit nach Anspruch 10, **dadurch gekennzeichnet, dass** die Gleitverbindung(en) (54) eine Längsrichtung aufweist/aufweisen, die parallel zu einer Achse (X1) des Sitzes (11) ist oder mit dieser zusammenfällt, um eine Bewegung des beweglichen Teils (25) entlang der Achse (X1) des Sitzes (11) zu ermöglichen.

12. Sitzeinheit nach Anspruch 10 oder 11, **dadurch gekennzeichnet, dass** der bewegliche Teil (25) zwei Platten (59, 60) umfasst, die zueinander einen von Null verschiedenen Winkel bilden.

13. Sitzeinheit nach einem der Ansprüche 10 bis 12, **dadurch gekennzeichnet, dass** sie eine Vorrichtung (63) zum Verriegeln und Entriegeln der Translation des beweglichen Teils (25) relativ zum feststehenden Teil (23) der Sichtschutzschale (13) umfasst.

14. Sitzeinheit nach Anspruch 13, **dadurch gekennzeichnet, dass** die Verriegelungs- und Entriegelungsvorrichtung (63) einen hakenförmigen Riegel (65) umfasst, der zwischen einer Verriegelungsposition, in der der Riegel (65) mit einem entsprechenden Verriegelungsstift (67) zusammenwirkt, der mit dem beweglichen Teil (25) verbunden ist, und einer Entriegelungsposition, in der der Riegel (65) vom Verriegelungsstift (67) gelöst ist, drehbar ist.

15. Sitzeinheit nach Anspruch 14, **dadurch gekennzeichnet, dass** der Riegel (65) an einem festen Ständer (68) angeordnet ist.

16. Sitzeinheit nach Anspruch 14 oder 15, **dadurch gekennzeichnet, dass** der Verriegelungsstift (67) an einem beweglichen Ständer (70) angeordnet ist, der mit dem beweglichen Teil (25) verbunden ist.

17. Sitzeinheit nach den Ansprüchen 15 und 16, **dadurch gekennzeichnet, dass** der bewegliche Ständer (70) mindestens einen Zentrierstift (72) zum Zusammenwirken mit einer entsprechenden Form im festen Ständer (68) aufweist.

18. Sitzeinheit nach einem der Ansprüche 13 bis 17, **dadurch gekennzeichnet, dass** sie eine Zugangsklappe (73) zur Verriegelungs- und Entriegelungsvorrichtung (63) aufweist.

19. Sitzeinheit nach Anspruch 18, **dadurch gekennzeichnet, dass** ein Betätigungsmittel (75), beispielsweise ein Steuerhebel oder ein Knopf, eine Bewegung der Klappe (73) aus einer geschlossenen Stellung, in der die Klappe (73) einen Zugangsraum zur Verriegelungs- und Entriegelungsvorrichtung (63) verschließt, in eine geöffnete Stellung, in der die Klappe (73) den Zugangsraum zur Verriegelungs- und Entriegelungsvorrichtung (63) öffnet, steuern kann.

20. Sitzeinheit nach Anspruch 19, **dadurch gekennzeichnet, dass** eine Nockenvorrichtung (76) einerseits mit dem Betätigungsmittel (75) über eine Verbindungsstange (77) und andererseits mit der Klappe (73) mechanisch verbunden ist.

21. Sitzeinheit nach Anspruch 13, **dadurch gekennzeichnet, dass** die Verriegelungs- und Entriegelungsvorrichtung (63) eine Klemme (89) umfasst, die sich an einer Trägerpalette (56) des Sitzes (11) befindet.

## Claims

1. An aircraft seat unit (10) comprising:
- a seat (11) movable between a sitting position and a lying position, and
- a privacy shell (13) extending at least partly around the seat (11),
- the privacy shell (13) comprising a fixed part (23) and a movable part (25) relative to the fixed part (23),
- the movable part (25) being movable between:
- a retracted position in which the movable part (25) delimits with the fixed part (23) a semi-enclosed space (14) around the seat (11) so as to provide the passenger with privacy, and
- a deployed position in which the movable part (25) is moved away from the seat (11) so as to clear a space for access to said seat (11),
**characterized in that**:
- the movable part (25) is spaced away from the seat (11) when it is in the deployed position, such that the seat (11) in the extended position can extend beyond a vertical ground projection of the semi-enclosed space (14) delimited by the privacy shell (13) when said privacy shell (13) is in the retracted position.

2. The seat unit according to claim 1, **characterized in that** the movable part (25) of the privacy shell (13) comprises:
- a primary wing (26),
- a secondary wing (27),
- a first pivot connection (29.1) being arranged between the primary wing (26) and the secondary wing (27) so as to allow rotation of the secondary wing (27) relative to the primary wing (26) about a first axis of rotation (X3),
- a second pivot connection (29.2) being arranged between the primary wing (26) and the fixed part (23) of the privacy shell (13) so as to allow rotation of the primary wing (26) relative to the fixed part (23) about a second axis of rotation (X4).

3. The seat unit according to claim 2, **characterized in that** a pivot connection (29.1, 29.2) is formed by at least one hinge (30), in particular three hinges (30).

4. The seat unit according to claim 3, **characterized in that** the hinge(s) (30) are of the invisible type.

5. The seat unit according to any one of the claims 2 to 4, **characterized in that** it comprises a connecting rod (35) having a first end rotatably mounted relative to the primary wing (26) and a second end rotatably mounted relative to a slider (36) capable of sliding along a slide (38) arranged on a lower portion (39) of the fixed part (23) of the privacy shell (13).

6. The seat unit according to any one of the claims 2 to 5, **characterized in that** it comprises a device (41) for locking and unlocking the rotation of the secondary wing (27) relative to the fixed part (23) of the privacy shell (13).

7. The seat unit according to claim 6, **characterized in that** the locking and unlocking device (41) comprises a latch (43) capable of selectively cooperating with a catch (44) in a locked state or of being disengaged from the catch (44) in an unlocked state.

8. The seat unit according to any one of the claims 2 to 7, **characterized in that** it comprises a device (42) for locking and unlocking the rotation of the primary wing (26) relative to the fixed part (23) of the privacy shell (13).

9. The seat unit according to claim 8, **characterized in that** the locking and unlocking device (42) comprises a finger (47) capable of selectively partially surrounding a stud (48) in a locked state and of being disengaged from the stud (48) in an unlocked state.

10. The seat unit according to claim 1, **characterized in that** it comprises a carriage (53) carrying the movable part (25) of the privacy shell (13), and at least one sliding connection (54) allowing translational movement of the carriage (53) relative to the fixed part (23) so as to move from the retracted position to the deployed position and vice versa.

11. The seat unit according to claim 10, **characterized in that** the sliding connection(s) (54) have a longitudinal direction parallel to or coincident with an axis (X1) of the seat (11) so as to allow movement of the movable part (25) along the axis (X1) of the seat (11).

12. The seat unit according to claim 10 or 11, **characterized in that** the movable part (25) comprises two panels (59, 60) forming a non-zero angle with respect to each other.

13. The seat unit according to any one of the claims 10 to 12, **characterized in that** it comprises a device (63) for locking and unlocking the translation of the movable part (25) relative to the fixed part (23) of the privacy shell (13).

14. The seat unit according to claim 13, **characterized in that** the locking and unlocking device (63) comprises a hook-shaped lock (65) which can rotate between a locking position in which said latch (65) cooperates with a corresponding locking pin (67) integral with the movable part (25) and an unlocking position in which said lock (65) is released from the locking pin (67).

15. The seat unit according to claim 14, **characterized in that** the lock (65) is arranged on a fixed upright (68).

16. The seat unit according to claim 14 or 15, **characterized in that** the locking pin (67) is arranged on a movable upright (70) integral with the movable part (25).

17. The seat unit according to claims 15 and 16, **characterized in that** the movable upright (70) comprises at least one centering pin (72) for cooperating with a corresponding shape in the fixed upright (68).

18. The seat unit according to any one of the claims 13 to 17, **characterized in that** it comprises an access flap (73) to the locking and unlocking device (63).

19. The seat unit according to claim 18, **characterized in that** an actuating means (75), such as a control lever or a button, is capable of controlling a movement of the movable flap (73) from a closed position in which the flap (73) closes an access space to the locking and unlocking device (63) to an open position in which the flap (73) opens the access space to the locking and unlocking device (63).

20. The seat unit according to claim 19, **characterized in that** a cam device (76) is mechanically connected on the one hand to the actuating means (75) via a connecting rod (77) and on the other hand to the flap (73).

21. The seat unit according to claim 13, **characterized in that** the locking and unlocking device (63) comprises a clamp (89) located on a support pallet (56) of the seat (11).
